(19) Europäisches Patentamt
European Patent Office
Office européen des brevets

(11) EP 4 471 103 A1

(12) EUROPEAN PATENT APPLICATION
published in accordance with Art. 153(4) EPC

(43) Date of publication:
**04.12.2024 Bulletin 2024/49**

(21) Application number: **23746781.6**

(22) Date of filing: **18.01.2023**

(51) International Patent Classification (IPC):
***C09J 133/06*** (2006.01) ***C09J 151/06*** (2006.01)
***C09J 175/04*** (2006.01) ***C09J 7/38*** (2018.01)

(52) Cooperative Patent Classification (CPC):
**C09J 7/38; C09J 133/06; C09J 151/06; C09J 175/04**

(86) International application number:
**PCT/JP2023/001309**

(87) International publication number:
**WO 2023/145567 (03.08.2023 Gazette 2023/31)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **26.01.2022 JP 2022010243**

(71) Applicant: **SEKISUI CHEMICAL CO., LTD.**
**Osaka-shi, Osaka 530-0047 (JP)**

(72) Inventors:
- **TSUJI, Nagisa**
  **Mishima-gun, Osaka 618-0021 (JP)**
- **OGATA, Yudai**
  **Mishima-gun, Osaka 618-0021 (JP)**

(74) Representative: **Cabinet Beau de Loménie**
**158, rue de l'Université**
**75340 Paris Cedex 07 (FR)**

# (54) ADHESIVE TAPE

(57) The present invention aims to provide an adhesive tape having excellent adhesion and exhibiting excellent holding power even under prolonged shear stress at high temperature. Provided is an adhesive tape including an adhesive layer, the adhesive layer containing an acrylic copolymer containing a structural unit derived from an alkyl (meth)acrylate and a structural unit derived from an olefin polymer having a polymerizable unsaturated double bond at an end, the adhesive layer having a swelling ratio of 40 or greater and 500 or less when immersed in tetrahydrofuran at a temperature of 25°C for 24 hours.



Processed by Luminess, 75001 PARIS (FR)

## Description

TECHNICAL FIELD

The present invention relates to adhesive tapes.

BACKGROUND ART

Adhesive tapes are used for assembling portable electronic devices such as mobile phones and personal digital assistants (PDAs) (for example, Patent Literatures 1 and 2). Adhesive tapes are also used for bonding of optical members (for example, Patent Literature 3).

CITATION LIST

- Patent Literature

Patent Literature 1: JP 2009-242541 A
Patent Literature 2: JP 2009-258274 A
Patent Literature 3: JP 2012-214544 A

SUMMARY OF INVENTION

- Technical problem

Such adhesive tapes used for fixing components require both resistance to peeling (adhesion) and resistance to shear stress (shift) (holding power). An effective way to improve the adhesion of an adhesive tape is to make it easily stretchable under peeling stress, in other words, to design the adhesive layer to be more flexible. In contrast, an effective way to improve the holding power of an adhesive tape is to make it less deformable under shear stress (shift), in other words, to design the adhesive layer to be harder. The adhesion and the holding power thus have a trade-off relationship, making it highly difficult to achieve both of them at high levels. It is particularly difficult to improve the holding power of the adhesive tape under prolonged shear stress (shift) at high temperature (around 70°C to 100°C).

The present invention aims to provide an adhesive tape having excellent adhesion and exhibiting excellent holding power even under prolonged shear stress at high temperature.

- Solution to problem

The disclosure 1 relates to an adhesive tape including an adhesive layer, the adhesive layer containing an acrylic copolymer containing a structural unit derived from an alkyl (meth)acrylate and a structural unit derived from an olefin polymer having a polymerizable unsaturated double bond at an end, the adhesive layer having a swelling ratio of 40 or greater and 500 or less when immersed in tetrahydrofuran at a temperature of 25°C for 24 hours.

The disclosure 2 relates to the adhesive tape of the disclosure 1, wherein the adhesive layer has a gel fraction of 20% by weight or greater and 65% by weight or less.

The disclosure 3 relates to the adhesive tape of the disclosure 1 or 2, wherein the acrylic copolymer contains a structural unit derived from a polar group-containing monomer.

The disclosure 4 relates to the adhesive tape of the disclosure 3, wherein the polar group-containing monomer includes a hydroxy group-containing monomer.

The disclosure 5 relates to the adhesive tape of the disclosure 4, wherein the acrylic copolymer contains 0.01% by weight or more and 2% by weight or less of a structural unit derived from the hydroxy group-containing monomer.

The disclosure 6 relates to the adhesive tape of the disclosure 1, 2, 3, 4, or 5, wherein the adhesive layer contains a crosslinking agent.

The disclosure 7 relates to the adhesive tape of the disclosure 6, wherein the crosslinking agent is an isocyanate crosslinking agent.

The disclosure 8 relates to the adhesive tape of the disclosure 1, 2, 3, 4, 5, 6, or 7, wherein the acrylic copolymer has a weight average molecular weight (Mw) of 500,000 or greater and 1,500,000 or less.

The disclosure 9 relates to the adhesive tape of the disclosure 1, 2, 3, 4, 5, 6, 7, or 8, wherein the alkyl (meth) acrylate is butyl acrylate.

The disclosure 10 relates to the adhesive tape of the disclosure 1, 2, 3, 4, 5, 6, 7, 8, or 9, wherein the acrylic copolymer contains 5% by weight or more and 30% by weight or less of the structural unit derived from an olefin polymer having a polymerizable unsaturated double bond at an end.

The disclosure 11 relates to an adhesive tape including an adhesive layer, the adhesive layer containing an acrylic copolymer containing a structural unit derived from butyl acrylate and a structural unit derived from an olefin polymer having a polymerizable unsaturated double bond at an end, the adhesive layer containing an isocyanate crosslinking agent.

The disclosure 12 relates to the adhesive tape of the disclosure 1, 2, 3, 4, 5, 6, 7, 8, 9, 10, or 11, wherein the adhesive layer contains a tackifier resin.

The disclosure 13 relates to the adhesive tape of the disclosure 12, wherein the tackifier resin includes a high-hydroxy-value tackifier resin having a hydroxy value of 15 mg KOH/g or higher.

The disclosure 14 relates to the adhesive tape of the disclosure 13, wherein the adhesive layer contains 20 parts by weight or more and 40 parts by weight or less of the high-hydroxy-value tackifier resin having a hydroxy value of 15 mg KOH/g or higher relative to 100 parts by weight of the acrylic copolymer.

The disclosure 15 relates to the adhesive tape of the disclosure 12, 13, or 14, wherein the tackifier resin further includes a low-hydroxy-value tackifier resin having a hydroxy value of lower than 15 mg KOH/g.

The disclosure 16 relates to the adhesive tape of the disclosure 15, wherein the adhesive layer contains 10 parts by weight or more and 60 parts by weight or less of the low-hydroxy-value tackifier resin having a hydroxy value of lower than 15 mg KOH/g relative to 100 parts by weight of the acrylic copolymer.

The present invention is described in detail below.

The present inventors have found out that an adhesive tape including an adhesive layer can have improved adhesion and improved holding power when the adhesive layer contains an acrylic copolymer containing a structural unit derived from an alkyl (meth)acrylate and a structural unit derived from an olefin polymer having a polymerizable unsaturated double bond at an end. The present inventors have found out that such an adhesive tape can have improved holding power even under prolonged shear stress at high temperature when the adhesive layer further has a specific swelling ratio adjusted to a specific range or when the adhesive layer contains a structural unit derived from butyl acrylate selected as the structural unit derived from an alkyl (meth)acrylate while containing an isocyanate crosslinking agent. The inventors thus completed the present invention.

The adhesive tape of the present invention includes an adhesive layer.

The adhesive layer contains an acrylic copolymer containing a structural unit derived from an alkyl (meth)acrylate and a structural unit derived from an olefin polymer having a polymerizable unsaturated double bond at an end (hereinafter also simply referred to as an "acrylic copolymer"). The (meth)acrylate herein means acrylate or methacrylate.

The acrylic copolymer has a structure in which structural units each derived from an olefin polymer having a polymerizable unsaturated double bond at an end interact and aggregate to form pseudo-crosslinking points. With the acrylic copolymer having such a structure, the adhesive layer under low strain is hard and has high holding power like a crosslinked adhesive layer. In contrast, the adhesive layer under high strain due to peeling stress shows high flexibility because the pseudo-crosslinking points break and allow the molecules of the acrylic copolymer to stretch. In other words, the adhesive layer containing the acrylic copolymer improves the adhesion and holding power of the adhesive tape.

In one embodiment of the present invention, the adhesive layer has a swelling ratio of 40 or greater and 500 or less when immersed in tetrahydrofuran at a temperature of 25°C for 24 hours.

The adhesive layer having a swelling ratio of 40 or greater can improve the adhesion of the adhesive tape. The adhesive layer having a swelling ratio of 500 or less can improve the holding power of the adhesive tape under prolonged shear stress at high temperature. The swelling ratio of the adhesive layer is preferably 50 or greater and 300 or less, more preferably 150 or less.

The swelling ratio of the adhesive layer can be measured by the following method.

First, the adhesive layer is immersed in tetrahydrofuran at a temperature of 25°C for 24 hours, and the weight $W_3$ of the adhesive layer after immersion in tetrahydrofuran is measured. Subsequently, the adhesive layer is dried to remove tetrahydrofuran, and the weight $W_4$ of the adhesive layer after removal of tetrahydrofuran by drying is measured. The swelling ratio of the adhesive layer is calculated using the following expression (2). Swelling ratio = $W_3/W_4$ (2)

The swelling ratio of the adhesive layer may be adjusted to the above range by any method. Preferred is a method of adjusting the composition of the acrylic copolymer. Particularly preferred is a method of incorporating a structural unit derived from a polar group-containing monomer into the acrylic copolymer in addition to the structural unit derived from an alkyl (meth)acrylate and the structural unit derived from an olefin polymer having a polymerizable unsaturated double bond at an end. Also preferred is a method of adjusting the type and amount of the polar group-containing monomer to be incorporated. Also preferred is a method of adjusting the weight average molecular weight (Mw) of the acrylic copolymer to an appropriate range. Also preferred are a method of adjusting the type and amount of a tackifier resin in the adhesive layer, a method of adjusting the type and amount of a crosslinking agent in the adhesive layer, and a method of adjusting the gel fraction of the adhesive layer to an appropriate range.

The adhesive layer may have any gel fraction, but preferably has a gal fraction of 20% by weight or greater and 65% by weight or less. The adhesive layer having a gel fraction within the above range makes it easy to adjust the swelling ratio of the adhesive layer to the range described above.

The adhesive layer having a gel fraction of 20% by weight or greater can further improve the holding power of the adhesive tape under prolonged shear stress at high temperature. The adhesive layer having a gel fraction of 65% by weight or less can further improve the adhesion of the adhesive tape. The gel fraction of the adhesive layer is more preferably 35% by weight or greater and is more preferably 60% by weight or less, still more preferably 50% by weight or less.

The gel fraction of the adhesive layer can be measured by the following method.

First, 0.1 g of the adhesive of the adhesive layer is scraped off, immersed in 50 ml of tetrahydrofuran, and shaken with a shaker at a temperature of 23°C at 200 rpm for 24 hours. After shaking, a metal mesh (opening #200 mesh) is used to separate tetrahydrofuran and the adhesive having swollen by absorbing tetrahydrofuran. The separated adhesive is dried at 110°C for one hour. The weight of the adhesive including the metal mesh after drying is measured, and the gel fraction is calculated using the following expression (1).

$$\text{Gel fraction (\% by weight)} = 100 \times (W_1 - W_2)/W_0 \quad (1)$$

($W_0$: initial weight of adhesive, $W_1$: weight of adhesive including metal mesh after drying, $W_2$: initial weight of metal mesh)

The adhesive layer preferably has a loss tangent (tan δ, hereinafter simply "loss tangent") that peaks at 40°C or lower as measured at a measurement frequency of 10 Hz using a dynamic viscoelasticity measuring device.

The adhesive layer having a loss tangent peak within the above range can further improve the adhesion and holding power of the adhesive tape. The adhesive layer more preferably has a loss tangent peak at 35°C or lower, still more preferably at 25°C or lower. The loss tangent peak temperature can be adjusted with raw materials of the acrylic copolymer.

The loss tangent can be determined by measuring a dynamic viscoelastic spectrum from -100°C to 200°C using a viscoelastic spectrometer (available from IT Keisoku Seigyo Co., Ltd., DVA-200, or its equivalent product) at a low-heating-rate, shear deformation mode at 5°C/min at 10 Hz.

The acrylic copolymer contains a structural unit derived from an alkyl (meth)acrylate and a structural unit derived from an olefin polymer having a polymerizable unsaturated double bond at an end.

The alkyl (meth)acrylate is not limited and may be an alkyl (meth)acrylate having a linear or branched C1-C24 alkyl group, for example. Specific examples include methyl (meth)acrylate, ethyl (meth)acrylate, n-butyl (meth)acrylate, s-butyl (meth)acrylate, t-butyl (meth)acrylate, isobutyl (meth)acrylate, n-pentyl (meth)acrylate, isopentyl (meth)acrylate, n-hexyl (meth)acrylate, isohexyl (meth)acrylate, n-heptyl (meth)acrylate, isoheptyl (meth)acrylate, 2-ethylhexyl (meth) acrylate, n-octyl (meth)acrylate, isooctyl (meth)acrylate, n-nonyl (meth)acrylate, isononyl (meth)acrylate, n-decyl (meth) acrylate, isodecyl (meth)acrylate, n-dodecyl (meth)acrylate, n-tridecyl (meth)acrylate, n-tetradecyl (meth)acrylate, pentadecyl (meth)acrylate, hexadecyl (meth)acrylate, heptadecyl (meth)acrylate, stearyl (meth)acrylate, and isostearyl (meth)acrylate. Preferred among these are alkyl (meth)acrylates having a C4-C8 alkyl group because they make it easy to satisfy the later-described glass transition temperatures, leading to further improved adhesion of the adhesive tape. Butyl acrylate is more preferred, and n-butyl acrylate is still more preferred. These alkyl (meth)acrylates may be used alone in combination of two or more thereof.

The amount of the structural unit derived from an alkyl (meth)acrylate in the acrylic copolymer is not limited but is preferably 50% by weight or more and 95% by weight or less. When the amount of the structural unit derived from an alkyl (meth)acrylate is within the above range, the adhesion and holding power of the adhesive tape can be further improved. The amount of the structural unit derived from an alkyl (meth)acrylate is more preferably 60% by weight or more, still more preferably 70% by weight or more and is more preferably 90% by weight or less, still more preferably 85% by weight or less.

The olefin polymer having a polymerizable unsaturated double bond at an end may have a polymerizable unsaturated double bond at one end or may have polymerizable unsaturated double bonds at both ends. Preferred is an olefin polymer having a polymerizable unsaturated double bond at one end because such an olefin polymer is less likely to undergo chemical intramolecular crosslinking and makes it easy to adjust the swelling ratio of the adhesive layer to the range described above.

The olefin polymer having a polymerizable unsaturated double bond at an end is not limited. Examples thereof include ethylene-butylene copolymers, ethylene-propylene copolymers, ethylene polymers, propylene polymers, and butylene polymers that have polymerizable unsaturated double bond(s) at one or both ends. The polymerizable unsaturated double bond may be contained in any group, such as a (meth)acryloyl group, a vinyl ether group, or a styryl group. Preferred among these is a (meth)acryloyl group because it has good copolymerizability with the alkyl (meth) acrylates.

Specific examples of the olefin polymer having a polymerizable unsaturated double bond at an end include ethylene macromonomers having a (meth)acryloyl group at one end, propylene macromonomers having a (meth)acryloyl group at one end, ethylene-butylene macromonomers having a (meth)acryloyl group at one end, and ethylene-propylene macromonomers having a (meth)acryloyl group at one end. Preferred among these are ethylene-butylene macromonomers having a (meth)acryloyl group at one end and ethylene-propylene macromonomers having a (meth)acryloyl group at one end, because they make it easy to satisfy the later-described glass transition temperatures, leading to further improved adhesion of the adhesive tape. These olefin polymers having a polymerizable unsaturated double bond at an end may be used alone or in combination of two or more thereof. The macromonomer herein refers to a monomer having a weight average molecular weight of around 1,000 to 100,000 and having a polymerizable functional group.

The amount of the structural unit derived from an olefin polymer having a polymerizable unsaturated double bond at an end in the acrylic copolymer is not limited but is preferably 5% by weight or more and 30% by weight or less. When the amount of the structural unit derived from an olefin polymer having a polymerizable unsaturated double bond at an end is 5% by weight or more, an appropriate number of pseudo-crosslinking points are formed, leading to further improved adhesion and holding power of the adhesive tape. When the amount of the structural unit derived from an olefin polymer having a polymerizable unsaturated double bond at an end is 30% by weight or less, cohesive failure of the adhesive layer can be further reduced. The amount of the structural unit derived from an olefin polymer having a polymerizable unsaturated double bond at an end is more preferably 8% by weight or more, still more preferably 10% by weight or more and is more preferably 27% by weight or less, still more preferably 25% by weight or less.

The acrylic copolymer preferably contains a structural unit derived from an alkyl (meth)acrylate having a C4-C8 alkyl group and a structural unit derived from an ethylene-butylene macromonomer having a (meth)acryloyl group at one end or an ethylene-propylene macromonomer having a (meth)acryloyl group at one end, more preferably contains a structural unit derived from butyl acrylate and a structural unit derived from an ethylene-butylene macromonomer having a (meth)acryloyl group at one end or an ethylene-propylene macromonomer having a (meth)acryloyl group at one end, because such an acrylic copolymer can easily satisfy the later-described glass transition temperatures, leading to further improved adhesion of the adhesive tape.

In the acrylic copolymer, the amount of a structural unit derived from a monomer containing two or more polymerizable unsaturated double bonds is preferably 0.1% by weight or less.

As described above, the acrylic copolymer under low strain shows properties like those of a crosslinked adhesive layer because the structural units derived from an olefin polymer having a polymerizable unsaturated double bond at an end form pseudo-crosslinking points. In contrast, the acrylic copolymer under high strain shows properties like those of an adhesive without a crosslinked structure because the pseudo-crosslinking points break. Thus, reducing the amount of the structural unit derived from a monomer containing two or more polymerizable unsaturated double bonds, which tends to form a chemically crosslinked structure, allows the molecules of the acrylic copolymer to stretch under high strain more easily, leading to further improved adhesion. The amount of the structural unit derived from a monomer containing two or more polymerizable unsaturated double bonds is more preferably 0%.

The acrylic copolymer preferably contains a structural unit derived from a polar group-containing monomer.

The acrylic copolymer containing the structural unit derived from a polar group-containing monomer can increase the adhesion and holding power of the adhesive tape because the polar groups interact with each other. In the acrylic copolymer containing the structural unit derived from a polar group-containing monomer, when the adhesive layer further contains a crosslinking agent, the molecules of the acrylic copolymer are chemically crosslinked via the crosslinking agent. Adjusting the degree of crosslinking at this time can adjust the swelling ratio and gel fraction of the adhesive layer to appropriate ranges.

Examples of the polar group-containing monomer include unsaturated monocarboxylic acids such as (meth) acrylic acid, (meth)acryloyl acetic acid, (meth)acryloyl propionic acid, (meth)acryloyl butyric acid, (meth)acryloyl pentanoic acid, and crotonic acid; and maleic acid, fumaric acid, citraconic acid, mesaconic acid, itaconic acid, N-vinyl-2-pyrrolidone, (meth)acryloylmorpholine, (meth)acrylamide, N,N-dimethyl(meth)acrylamide, N-isopropyl(meth)acrylamide, dimethylaminoethyl (meth)acrylate, and diethylaminoethyl (meth)acrylate. Examples also include hydroxy group-containing monomers such as 4-hydroxybutyl (meth)acrylate and 2-hydroxyethyl (meth)acrylate. In particular, the polar group-containing monomer is preferably at least one selected from the group consisting of a carboxy group-containing monomer and a hydroxy group-containing monomer because these monomers make it easy to adjust the swelling ratio of the adhesive layer to the range described above. The polar group-containing monomer is more preferably a hydroxy group-containing monomer. These polar group-containing monomers may be used alone or in combination of two or more thereof.

The amount of the structural unit derived from a polar group-containing monomer in the acrylic copolymer is not limited but is preferably 0.1% by weight or more and 10% by weight or less. When the amount of the structural unit derived from a polar group-containing monomer is 0.1% by weight or more, the interactions between polar groups can be further enhanced. When the amount of the structural unit derived from a polar group-containing monomer is 10% by weight or less, the acrylic copolymer is not excessively hard, leading to further improved adhesion of the adhesive tape. The amount of the structural unit derived from a polar group-containing monomer is more preferably 1% by weight or more, still more preferably 3% by weight or more and is more preferably 8% by weight or less, still more preferably 6% by weight or less.

The amount of a structural unit derived from the hydroxy group-containing monomer in the acrylic copolymer is not limited but is preferably 0.01% by weight or more and 2% by weight or less. When the amount of the structural unit derived from the hydroxy group-containing monomer is within the above range, the swelling ratio of the adhesive layer can be easily adjusted to the range described above, leading to further improved adhesion and holding power of the adhesive tape. The amount of the structural unit derived from the hydroxy group-containing monomer is more preferably 0.05% by weight or more and 1% by weight or less.

Preferably, the acrylic copolymer has glass transition temperatures in the range from -100°C to 200°C as measured by differential scanning calorimetry, and all the glass transition temperatures are -20°C or lower.

When the acrylic copolymer has glass transition temperatures within the above temperature range and all the glass transition temperatures are -20°C or lower, in other words, when the acrylic copolymer contains no structure with a high glass transition temperature, the molecules of the acrylic copolymer are easily stretchable, leading to further improved adhesion of the adhesive tape. All the glass transition temperatures are more preferably -30°C or lower, still more preferably -35°C or lower. The glass transition temperatures can be adjusted by adjusting the types of the monomers as materials of the acrylic copolymer.

The glass transition temperatures can be determined by measurement under a nitrogen atmosphere (nitrogen flow, flow rate 50 mL/min) using a differential scanning calorimeter (e.g., 220C available from Seiko Instruments Inc.) by a method in conformity with JIS K6240:2011 in a measurement temperature range from -100°C to 200°C at a temperature increase rate of 10°C/min.

The acrylic copolymer may have any weight average molecular weight (Mw), but preferably has a weight average molecular weight (Mw) of 500,000 or greater and 2,000,000 or less. The acrylic copolymer having a weight average molecular weight (Mw) of 500,000 or greater makes it easy to adjust the swelling ratio of the adhesive layer to the range described above, leading to further improved adhesion and holding power of the adhesive tape. The acrylic copolymer having a weight average molecular weight (Mw) of 2,000,000 or less can lead to higher adhesion of the adhesive tape. The weight average molecular weight (Mw) of the acrylic copolymer is more preferably 650,000 or greater, still more preferably 800,000 or greater and is more preferably 1,500,000 or less, still more preferably 1,200,000 or less.

The acrylic copolymer may have any molecular weight distribution (weight average molecular weight/number average molecular weight, Mw/Mn), but preferably has a molecular weight distribution of 1.0 or greater and 6.0 or less. The acrylic copolymer having a molecular weight distribution (Mw/Mn) within the above range can further improve the adhesion and holding power of the adhesive tape. The molecular weight distribution (Mw/Mn) of the acrylic copolymer is more preferably 1.5 or greater and 4.5 or less.

The weight average molecular weight (Mw) and the number average molecular weight (Mn) can be determined by GPC using a polystyrene standard, for example. Specifically, it can be measured using "2690 Separations Module" available from Waters Corporation as a measurement device, "GPC KF-806L" available from Showa Denko K.K. as a column, and ethyl acetate as a solvent, under the conditions of a sample flow rate of 1 mL/min and a column temperature of 40°C.

The amount of the acrylic copolymer in the adhesive layer is not limited. The acrylic copolymer is preferably a main component in the polymer component constituting the adhesive layer (i.e., a component accounting for more than 50% by weight of the polymer component).

The adhesive layer preferably contains a crosslinking agent.

The crosslinking agent contained in the adhesive layer allows the molecules of the acrylic copolymer to be chemically crosslinked via the crosslinking agent. Adjusting the degree of crosslinking at this time can adjust the swelling ratio and gel fraction of the adhesive layer to appropriate ranges. Here, for chemical crosslinking of the molecules of the acrylic copolymer via the crosslinking agent, the acrylic copolymer preferably includes the structural unit derived from a polar group-containing monomer.

The crosslinking agent is not limited. Examples thereof include epoxy crosslinking agents and isocyanate crosslinking agents. Preferred among these are isocyanate crosslinking agents because they make it easy to adjust the swelling ratio of the adhesive layer to the range described above, leading to further improved adhesion and holding power of the adhesive tape.

The amount of the crosslinking agent in the adhesive layer is not limited. When the crosslinking agent is an isocyanate crosslinking agent, the amount thereof is preferably 0.1 parts by weight or more and 5 parts by weight or less, more preferably 0.5 parts by weight or more and 3 parts by weight or less relative to 100 parts by weight of the acrylic copolymer, because the isocyanate crosslinking agent in such an amount makes it easy to adjust the swelling ratio of the adhesive layer to the range described above, leading to further improved adhesion and holding power of the adhesive tape.

Preferably, the acrylic copolymer contains a structural unit derived from at least one selected from the group consisting of a carboxy group-containing monomer and a hydroxy group-containing monomer and the adhesive layer contains an isocyanate crosslinking agent, because this makes it easy to adjust the swelling ratio of the adhesive layer to the range described above, leading to further improved adhesion and holding power of the adhesive tape. More preferably, the acrylic copolymer contains a structural unit derived from a hydroxy group-containing monomer and the adhesive layer contains an isocyanate crosslinking agent.

The adhesive layer preferably contains a tackifier resin. The tackifier resin further improves the adhesion of the adhesive tape.

The tackifier resin is not limited but preferably includes a high-hydroxy-value tackifier resin having a hydroxy value of 15 mg KOH/g or higher.

The high-hydroxy-value tackifier resin, having a high polarity, tends not to be compatible with the structural unit derived from an olefin polymer having a polymerizable unsaturated double bond at an end, which is a low-polarity structural unit. As a result, the high-hydroxy-value tackifier resin can further improve the adhesion without inhibiting the formation of pseudo-crosslinking points by interactions between the low-polarity structural units derived from an olefin polymer having a polymerizable unsaturated double bond at an end.

The hydroxy value of the high-hydroxy-value tackifier resin is more preferably 30 mg KOH/g or higher and is preferably 200 mg KOH/g or lower, more preferably 150 mg KOH/g or lower. Examples of the high-hydroxy-value tackifier resin include terpene phenol resins and polymerized rosin ester resins.

The amount of the high-hydroxy-value tackifier resin in the adhesive layer is not limited. The amount is preferably 1 part by weight or more and 40 parts by weight or less relative to 100 parts by weight of the acrylic copolymer. The amount of the high-hydroxy-value tackifier resin is more preferably 20 parts by weight or more and 35 parts by weight or less.

The tackifier resin may further include a low-hydroxy-value tackifier resin having a hydroxy value of lower than 15 mg KOH/g.

The low-hydroxy-value tackifier resin, having a low polarity, tends to be compatible with the structural unit derived from an olefin polymer having a polymerizable unsaturated double bond at an end. As a result, the low-hydroxy-value tackifier resin is compatible with the pseudo-crosslinking points and thus makes them appropriately flexible, which presumably improves the adhesion. Even when a large amount of the low-hydroxy-value tackifier resin is contained, combining it with the high-hydroxy-value tackifier resin is considered to reduce a decrease in the holding power, so that the holding power is secured while the initial adhesion is improved. Examples of the low-hydroxy-value tackifier resin include terpene resins and petroleum resins.

The amount of the low-hydroxy-value tackifier resin in the adhesive layer is not limited but is preferably 10 parts by weight or more and 60 parts by weight or less, more preferably 25 parts by weight or more and 40 parts by weight or less relative to 100 parts by weight of the acrylic copolymer.

The adhesive layer may have any weight ratio of the low-hydroxy-value tackifier resin to the high-hydroxy-value tackifier resin (low-hydroxy-value tackifier resin/high-hydroxy-value tackifier resin). To further improve the adhesion strength to SUS while reducing cohesive failure, the weight ratio is preferably 0.3 or greater, more preferably 0.8 or greater and is preferably 4.0 or less, more preferably 1.5 or less.

The adhesive layer may contain conventionally known fine particles and additives such as inorganic fine particles, conductive fine particles, antioxidants, foaming agents, organic fillers, or inorganic fillers, if necessary.

An embodiment of the present invention has been described above which is an adhesive tape including an adhesive layer, the adhesive layer containing an acrylic copolymer containing a structural unit derived from an alkyl (meth) acrylate and a structural unit derived from an olefin polymer having a polymerizable unsaturated double bond at an end, the adhesive layer having a swelling ratio of 40 or greater and 500 or less when immersed in tetrahydrofuran at a temperature of 25°C for 24 hours. The present invention also provides another embodiment which is an adhesive tape including an adhesive layer, the adhesive layer containing an acrylic copolymer containing a structural unit derived from butyl acrylate and a structural unit derived from an olefin polymer having a polymerizable unsaturated double bond at an end, the adhesive layer containing an isocyanate crosslinking agent. In other words, an adhesive tape can exhibit excellent holding power even under prolonged shear stress at high temperature also when the adhesive layer contains a structural unit derived from butyl acrylate selected as the structural unit derived from an alkyl (meth)acrylate and contains an isocyanate crosslinking agent, instead of having a swelling ratio adjusted to 40 or greater and 500 or less.

The adhesive layer may have any thickness, but preferably has a thickness of 5 um or greater, more preferably 10 um or greater, still more preferably 15 um or greater, while preferably 200 um or less, more preferably 150 um or less, still more preferably 100 um or less. The adhesive layer having a thickness in this range allows the adhesive tape to have excellent adhesion, excellent holding power, and excellent handleability.

The adhesive tape of the present invention may be a non-supported tape including no substrate, or may be a supported tape including a substrate and the adhesive layer formed thereon. The adhesive tape of the present invention may be a one-sided adhesive tape including the adhesive layer on one surface of a substrate, or may be a double-sided adhesive tape including the adhesive layer on each of the two surfaces of a substrate. To provide excellent reworkability, the adhesive tape of the present invention preferably includes a substrate and the adhesive layer on at least one surface of the substrate.

The substrate is not limited. Examples thereof include sheets made of resins such as acrylic, olefin, polycarbonate, vinyl chloride, ABS, polyethylene terephthalate (PET), nylon, urethane, and polyimide, sheets having a mesh-like structure, and porous sheets.

The substrate may have any thickness, but preferably has a thickness of 5 um or greater and 200 um or less. The substrate having a thickness in this range allows the adhesive tape to have appropriate stiffness and thus excellent handleability. The thickness of the substrate is more preferably 10 um or greater and 150 um or less.

The adhesive tape of the present invention may be produced by any method, and may be produced by a conventionally known method. For example, first, the alkyl (meth)acrylate, the olefin polymer having a polymerizable unsaturated double bond at an end, and optionally other monomer(s) are copolymerized by a conventional method to give an acrylic copolymer. Next, the obtained acrylic copolymer is mixed with the tackifier resin(s) and other additive(s) if necessary to give an adhesive solution, and the adhesive solution is applied to a release-treated film and dried, whereby the adhesive tape can be produced. Alternatively, the adhesive tape produced by the method above may be used as an adhesive layer and bonded to a substrate, whereby a supported adhesive tape may be produced.

The adhesive tape of the present invention may be used in any application. Since the adhesive tape has excellent adhesion and exhibits excellent holding power even under prolonged shear stress at high temperature, the adhesive tape is preferably used in assembling portable electronic devices or in applications involving bonding of optical members.

- Advantageous Effects of Invention

The present invention can provide an adhesive tape having excellent adhesion and exhibiting excellent holding power even under prolonged shear stress at high temperature.

## BRIEF DESCRIPTION OF DRAWINGS

FIG. 1 is a schematic view illustrating a method for evaluating shear holding power.

## DESCRIPTION OF EMBODIMENTS

The embodiments of the present invention will be described in more detail below with reference to, but not limited to, examples.

(Example 1)

(1) Preparation of acrylic copolymer

A reactor equipped with a thermometer, a stirrer, and a condenser was provided. The reactor was charged with 73.9 parts by weight of n-butyl acrylate, 20 parts by weight of an ethylene-butylene macromonomer, 6 parts by weight of acrylic acid, 0.1 parts by weight of 4-hydroxybutyl acrylate, 0.01 parts by weight of lauryl mercaptan, and 80 parts by weight of ethyl acetate, and then heated to start reflux. Subsequently, 0.01 parts by weight of 1,1-bis(t-hexylperoxy)-3,3,5-trimethylcyclohexane as a polymerization initiator was added to the reactor to start polymerization under reflux. Then, 0.01 parts by weight of 1,1-bis(t-hexylperoxy)-3,3,5-trimethylcyclohexane was added one hour after and two hours after the start of polymerization. Four hours after the start of polymerization, 0.05 parts by weight of t-hexyl peroxypivalate was added to continue the polymerization reaction. Eight hours after the start of polymerization, a solution of an acrylic copolymer in ethyl acetate, with a solid content of 55% by weight, was obtained.

The weight average molecular weight and the molecular weight distribution of the obtained acrylic copolymer were measured using 2690 Separations Module (available from Waters) as a measurement device, GPC KF-806L (available from Showa Denko K.K.) as a column, ethyl acetate as a solvent, under the conditions of a sample flow rate of 1 mL/min and a column temperature of 40°C.

The details of the macromonomer are as follows.

Ethylene-butylene macromonomer (olefin polymer having a methacryloyl group at one end, available from Kraton Polymers Japan, HPVM-L1253, weight average molecular weight 7,000, glass transition temperature -68°C)

(2) Production of adhesive tape

To the solution of the acrylic copolymer in ethyl acetate were added 25 parts by weight of G150 (YS Polyster G150) and 30 parts by weight of PX1150 as tackifier resins and 0.2 parts by weight of an isocyanate crosslinking agent, relative to 100 parts by weight of the solids of the solution. They were mixed to give an adhesive solution. A 50-μm-thick polyethylene terephthalate (PET) film whose one surface was release-treated was provided. The obtained adhesive solution was applied to the release-treated surface with a doctor blade to a dry film thickness of 40 um. The applied solution was dried at 110°C for five minutes to give an adhesive tape.

The details of tackifier resins and cross-linking agents are as follows.

G150 (YS Polyster G150) (terpene phenol resin, available from Yasuhara Chemical Co., Ltd., hydroxy value 140 mg KOH/g)
U115 (YS Polyster U115) (terpene phenol resin, available from Yasuhara Chemical Co., Ltd., hydroxy value 20 mg KOH/g)
PX1150 (YS Resin PX1150) (terpene resin, available from Yasuhara Chemical Co., Ltd., hydroxy value 0 mg KOH/g)
PX800 (YS Resin PX800) (terpene resin, available from Yasuhara Chemical Co., Ltd., hydroxy value 0 mg KOH/g)
Coronate L-45 (isocyanate crosslinking agent, available from Tosoh Corporation)
Coronate HX (isocyanate crosslinking agent, available from Tosoh Corporation)
Aluminum trisacetylacetonate (metal crosslinking agent, available from Matsumoto Fine Chemical Co., Ltd.)
Trimethylolpropane-tri-β-aziridinylpropionate (aziridine crosslinking agent, available from Tokyo Chemical Industry Co., Ltd.)
PEROYL L (organic peroxide crosslinking agent, available from NOF Corporation)

(3) Measurement of swelling ratio

First, an adhesive layer of the adhesive tape was immersed in tetrahydrofuran at a temperature of 25°C for 24 hours, and the weight $W_3$ of the adhesive layer after immersion in tetrahydrofuran was measured. Subsequently, the adhesive layer was dried to remove tetrahydrofuran, and the weight $W_4$ of the adhesive layer after removal of tetrahydrofuran by drying was measured. The swelling ratio of the adhesive layer was calculated using the following expression (2).

$$\text{Swelling ratio} = W_3/W_4 \quad (2)$$

(4) Measurement of gel fraction

First, 0.1 g of the adhesive of the adhesive layer was scraped off, immersed in 50 ml of tetrahydrofuran, and shaken with a shaker at a temperature of 23°C at 200 rpm for 24 hours. After shaking, a metal mesh (opening #200 mesh) was used to separate tetrahydrofuran and the adhesive having swollen by absorbing tetrahydrofuran. The separated adhesive was dried at 110°C for one hour. The weight of the adhesive including the metal mesh after drying was measured, and the gel fraction was calculated using the following expression (1).

$$\text{Gel fraction (\% by weight)} = 100 \times (W_1 - W_2)/W_0 \quad (1)$$

($W_0$: initial weight of adhesive, $W_1$: weight of adhesive including metal mesh after drying, $W_2$: initial weight of metal mesh)

(Examples 2 to 31 and Comparative Examples 1 to 4 and 6 to 9)

Adhesive tapes were obtained as in Example 1 except that changes were made as shown in Tables 1 and 2.
The adhesive tape obtained in Comparative Example 3 had an uncrosslinked adhesive layer and, in the swelling ratio measurement, the weight $W_3$ of the adhesive layer after immersion in tetrahydrofuran and the weight $W_4$ of the adhesive layer after removal of tetrahydrofuran by drying were both 0. The swelling ratio was thus unable to be determined in Comparative Example 3 ("*" in Table 2).

(Comparative Example 5)

An adhesive tape was obtained as in Example 1 except that the amount of lauryl mercaptan was changed to 0.2 parts by weight in the production of the acrylic copolymer, and that changes were made as shown in Table 2.

<Evaluation>

The adhesive tapes obtained in the examples and the comparative examples were evaluated as follows. Tables 1 and 2 show the results.

(1) Evaluation of adhesion (180° peel test with SUS)

The adhesive tape was cut to a width of 25 mm to give a specimen. Subsequently, the obtained specimen was put on a SUS plate and pressure-bonded thereto by moving a 1-kg rubber roller back and forth once thereon. The specimen was left to stand at 23°C for 24 hours, and the resulting measurement sample was subjected to a 180° peel test in conformity with JIS Z 0237:2009 at a tensile rate of 300 mm/min. The adhesion (N/inch) at 23°C was measured.

The adhesive tapes obtained in Examples 22 and 23 had adhesions of 50 N/inch or greater, but had failure (cohesive failure) in the adhesive layer ("**" in Table 2). The adhesive tapes of the examples other than Examples 22 and 23 and of the comparative examples had interfacial failure.

oo (Excellent): An adhesion of 50 N/inch or greater.
◦ (Good): An adhesion of 43 N/inch or greater and less than 50 N/inch.
Δ (Fair): An adhesion of 40 N/inch or greater and less than 43 N/inch.
× (Poor): An adhesion of less than 40 N/inch.

(2) Shear holding power at high temperature (85°C) (holding power test)

FIG. 1 is a schematic view illustrating a method for evaluating shear holding power.

First, the adhesive tape was cut to a width of 25 mm and a length of 60 mm to give a specimen 6 in conformity with JIS Z-1528. One surface of the specimen 6 was backed with a polyethylene terephthalate (PET) film 5. The other surface of the specimen 6 was bonded at 23°C to a cold-rolled stainless steel plate (SUS 304 plate) 7 having a thickness of 2.0 mm, a width of 50 mm, and a length of 75 mm. At this time, the specimen 6 was bonded to be longitudinally shifted from the SUS 304 plate 7 such that the bonding length of the adhesive tape was 25 mm and that the specimen 6 protruded from an end of the SUS 304 plate 7. The specimen 6 was then pressure-bonded to the SUS 304 plate 7 by moving a 2-kg roller back and forth once, whereby a measurement sample was prepared. The measurement sample was left to stand in an atmosphere at 23°C and 50% RH for 20 minutes. Subsequently, a 1-kg weight 8 was attached to the measurement sample to apply a load in a shear direction to the measurement sample. The holding power was evaluated in accordance with the following criteria from the shift of the specimen 6 after 24 hours from the application of the load with the weight 8.

oo (Excellent): A shift of 0.5 mm or less.
◦ (Good): A shift of greater than 0.5 mm and 1.0 mm or less.
Δ (Fair): A shift of greater than 1.0 mm.
× (Poor): The specimen fell down.

[Table 1]

[Table 2]

| | | Example | | | | | | | | | | | | | | | | | | | |
|---|---|---|---|---|---|---|---|---|---|---|---|---|---|---|---|---|---|---|---|---|---|
| | | 1 | 2 | 3 | 4 | 5 | 6 | 7 | 8 | 9 | 10 | 11 | 12 | 13 | 14 | 15 | 16 | 17 | 18 | 19 | 20 |
| Acrylic copolymer [% by weight] | n-Butyl acrylate (BA) | 73.9 | 73.9 | 73.9 | 73.9 | 73.5 | 73.9 | 73.9 | 74 | 73.9 | 72 | 71.5 | 73.9 | 73.9 | 73.9 | 73.9 | 73.9 | 73.9 | 73.5 | 73.9 | 83.9 |
| | 2-Ethylhexyl acrylate (2EHA) | — | — | — | — | — | — | — | — | — | — | — | — | — | — | — | — | — | — | — | — |
| | Ethylene-butylene macromonomer (EBm) | 20 | 20 | 20 | 20 | 20 | 20 | 20 | 20 | 20 | 20 | 20 | 20 | 20 | 20 | 20 | 20 | 20 | 20 | 20 | 10 |
| | Acrylic acid (AAc) | 6 | 6 | 6 | 6 | 6 | 6 | 6 | 6 | 6 | 6 | 6 | 6 | 6 | 6 | 6 | 6 | 6 | 6 | 6 | 6 |
| | 4-Hydroxybutyl acrylate (4HBA) | 0.1 | 0.1 | 0.1 | 0.1 | 0.5 | 0.1 | — | 0.01 | 0.1 | 2 | 2.5 | 0.1 | 0.1 | 0.1 | 0.1 | 0.1 | 0.1 | 0.5 | 0.1 | 0.1 |
| | 2-Hydroxyethyl acrylate (HEA) | — | — | — | — | — | — | 0.1 | — | — | — | — | — | — | — | — | — | — | — | — | — |
| Weight average molecular weight of acrylic copolymer | Mw | 900,000 | 900,000 | 900,000 | 900,000 | 900,000 | 900,000 | 850,000 | 900,000 | 900,000 | 900,000 | 900,000 | 500,000 | 900,000 | 900,000 | 900,000 | 900,000 | 900,000 | 900,000 | 900,000 | 900,000 |
| Molecular weight distribution of acrylic copolymer | Mw/Mn | 3 | 3 | 3 | 3 | 3 | 3 | 3 | 3 | 3 | 3 | 3 | 3 | 3 | 3 | 3 | 3 | 3 | 3 | 3 | 3 |
| Tackifier resin [parts by weight] | U115 (terpene phenol resin, hydroxy value 20 mg KOH/g) | — | — | — | — | — | — | — | — | — | — | — | — | 30 | — | — | — | — | — | — | — |
| | G150 (terpene phenol resin, hydroxy value 140 mg KOH/g) | 25 | 30 | 30 | 25 | 25 | 25 | 30 | 30 | 30 | 30 | 30 | 30 | — | 20 | 40 | 30 | 30 | 25 | 30 | 30 |
| | PX1150 (terpene resin, hydroxy value 0 mg KOH/g) | 30 | 30 | — | 30 | 30 | 30 | — | — | — | — | — | — | — | — | — | 10 | 25 | 30 | 30 | — |
| | PX800 (terpene resin, hydroxy value 0 mg KOH/g) | — | — | — | — | — | — | — | — | — | — | — | — | — | — | — | — | — | — | — | — |
| Weight ratio of tackifier resins | Low-hydroxy-value tackifier resin /high-hydroxy-value tackifier resin | 1.2 | 1.0 | 0.0 | 1.2 | 1.2 | 1.2 | 0.0 | 0.0 | 0.0 | 0.0 | 0.0 | 0.0 | 0.0 | 0.0 | 0.0 | 0.3 | 0.8 | 1.2 | 1.0 | 0.0 |
| Crosslinking agent [parts by weight] | L-45 (isocyanate crosslinking agent) | 0.2 | 0.5 | 0.5 | 1 | 1 | 1.5 | 1 | 2 | 1 | 0.2 | 0.2 | 1 | 1 | 1 | 1 | 1 | 1 | 0.5 | 1 | 1.5 |
| | Coronate HX (isocyanate crosslinking agent) | — | — | — | — | — | — | — | — | — | — | — | — | — | — | — | — | — | — | — | — |
| | Aluminum trisacetylacetonate (metal crosslinking agent) | — | — | — | — | — | — | — | — | — | — | — | — | — | — | — | — | — | — | — | — |
| | Trimethylolpropane-tri-β-aziridinylpropionate (aziridine crosslinking agent) | — | — | — | — | — | — | — | — | — | — | — | — | — | — | — | — | — | — | — | — |
| | PEROYL L (organic peroxide crosslinking agent) | — | — | — | — | — | — | — | — | — | — | — | — | — | — | — | — | — | — | — | — |
| Gel fraction of adhesive layer [% by weight] | | 10 | 21 | 46 | 40 | 60 | 65 | 26 | 50 | 54 | 60 | 60 | 30 | 55 | 53 | 54 | 56 | 36 | 52 | 40 | 60 |
| Swelling ratio of adhesive layer | | 300 | 144 | 81 | 63 | 43 | 40 | 107 | 40 | 59 | 50 | 40 | 90 | 60 | 60 | 62 | 60 | 53 | 60 | 51 | 50 |
| Evaluation | 180° Peel test with SUS [N/inch] | 50 | 52 | 43 | 47 | 40 | 40 | 43 | 43 | 43 | 43 | 40 | 45 | 42 | 40 | 44 | 43 | 44 | 44 | 43 | 40 |
| | | ○○ | ○○ | ○ | ○ | △ | △ | ○ | ○ | ○ | ○ | △ | ○ | △ | △ | ○ | ○ | ○ | ○ | ○ | △ |
| | Holding power test (85°C, shift after 24 hours) [mm] | 3.0 | 1.0 | 0.5 | 0.5 | 0.0 | 0.0 | 1.0 | 0.5 | 0.2 | 0.0 | 0.0 | 5.0 | 0.3 | 0.2 | 0.5 | 0.3 | 0.7 | 0.2 | 0.5 | 1.0 |
| | | △ | ○ | ○○ | ○○ | ○○ | ○○ | ○ | ○○ | ○○ | ○○ | ○○ | △ | ○○ | ○○ | ○○ | ○○ | ○ | ○○ | ○○ | ○ |

| | | Example | | | | | | | | | | | Comparative Example | | | | | | | | |
|---|---|---|---|---|---|---|---|---|---|---|---|---|---|---|---|---|---|---|---|---|---|
| | | 21 | 22 | 23 | 24 | 25 | 26 | 27 | 28 | 29 | 30 | 31 | 1 | 2 | 3 | 4 | 5 | 6 | 7 | 8 | 9 |
| Acrylic copolymer [% by weight] | n-Butyl acrylate (BA) | 63.9 | 73.9 | 73.9 | 73.9 | 59 | — | 73.9 | 73.9 | 73.9 | 73.9 | 73.9 | 74 | 73.5 | 73.9 | 93.9 | 73.9 | 74 | 73.9 | 74 | 73.9 |
| | 2-Ethylhexyl acrylate (2EHA) | — | — | — | — | 15 | 73.9 | — | — | — | — | — | — | — | — | — | — | — | — | — | — |
| | Ethylene-butylene macromonomer (EBm) | 30 | 20 | 20 | 20 | 20 | 20 | 20 | 20 | 20 | 20 | 20 | 20 | 20 | 20 | 0 | 20 | 20 | 20 | 20 | 20 |
| | Acrylic acid (AAc) | 6 | 6 | 6 | 6 | 6 | 6 | 6 | 6 | 6 | 6 | 6 | 6 | 6 | 6 | 6 | 6 | 6 | 6 | 6 | 6 |
| | 4-Hydroxybutyl acrylate (4HBA) | 0.1 | 0.1 | 0.1 | 0.1 | 0.1 | 0.1 | 0.1 | 0.1 | 0.1 | 0.1 | 0.1 | — | 0.5 | 0.1 | 0.1 | 0.1 | — | 0.1 | — | 0.1 |
| | 2-Hydroxyethyl acrylate (HEA) | — | — | — | — | — | — | — | — | — | — | — | — | — | — | — | — | — | — | — | — |
| Weight average molecular weight of acrylic copolymer | Mw | 900,000 | 900,000 | 900,000 | 500,000 | 900,000 | 900,000 | 700,000 | 1,300,000 | 1,600,000 | 900,000 | 900,000 | 900,000 | 900,000 | 900,000 | 900,000 | 250,000 | 250,000 | 900,000 | 900,000 | 900,000 |
| Molecular weight distribution of acrylic copolymer | Mw/Mn | 3 | 3 | 3 | 3 | 3 | 3 | 3 | 5 | 5 | 3 | 3 | 3 | 3 | 3 | 3 | 3 | 3 | 3 | 3 | 3 |
| Tackifier resin [parts by weight] | U115 (terpene phenol resin, hydroxy value 20 mg KOH/g) | — | — | — | — | — | — | — | — | — | — | — | — | — | — | — | — | — | — | — | — |
| | G150 (terpene phenol resin, hydroxy value 140 mg KOH/g) | 30 | 10 | 10 | 30 | 30 | 30 | 30 | 30 | 30 | 15 | 10 | 30 | 30 | 30 | 30 | 15 | 15 | 30 | 30 | 30 |
| | PX1150 (terpene resin, hydroxy value 0 mg KOH/g) | — | — | — | — | — | — | — | — | — | — | — | — | — | — | — | — | — | — | — | — |
| | PX800 (terpene resin, hydroxy value 0 mg KOH/g) | — | 60 | 70 | — | — | — | — | — | — | 40 | 40 | — | — | — | — | 40 | 40 | — | — | — |
| Weight ratio of tackifier resins | Low-hydroxy-value tackifier resin /high-hydroxy-value tackifier resin | 0.0 | 6.0 | 7.0 | 0.0 | 0.0 | 0.0 | 0.0 | 0.0 | 0.0 | 2.7 | 4.0 | 0 | 0 | 0 | 0 | 2.7 | 2.7 | 0 | 0 | 0 |
| Crosslinking agent [parts by weight] | L-45 (isocyanate crosslinking agent) | 0.5 | 2 | 1 | — | 1 | 1 | 1 | 1 | 1 | 1 | 1 | 5 | 1 | — | 2 | 4 | 4 | — | — | — |
| | Coronate HX (isocyanate crosslinking agent) | — | — | — | 0.1 | — | — | — | — | — | — | — | — | — | — | — | — | — | — | — | — |
| | Aluminum trisacetylacetonate (metal crosslinking agent) | — | — | — | — | — | — | — | — | — | — | — | — | — | — | — | — | — | 1 | — | — |
| | Trimethylolpropane-tri-β-aziridinylpropionate (aziridine crosslinking agent) | — | — | — | — | — | — | — | — | — | — | — | — | — | — | — | — | — | — | 1 | — |
| | PEROYL L (organic peroxide crosslinking agent) | — | — | — | — | — | — | — | — | — | — | — | — | — | — | — | — | — | — | — | 3 |
| Gel fraction of adhesive layer [% by weight] | | 60 | 45 | 30 | 8 | 30 | 50 | 40 | 50 | 50 | 50 | 36 | 52 | 68 | 0 | 40 | 5 | 5 | — | 50 | 60 |
| Swelling ratio of adhesive layer | | 65 | 43 | 84 | 450 | 90 | 60 | 60 | 70 | 60 | 60 | 40 | 24 | 38 | —* | 50 | 580 | 580 | — | 30 | 30 |
| Evaluation | 180° Peel test with SUS [N/inch] | 40 | 50 | 52 | 45 | 41 | 42 | 43 | 43 | 40 | 40 | 40 | 32 | 38 | 52 | 22 | 41 | 40 | 30 | 35 | 35 |
| | | △ | ○○** | ○○** | ○ | △ | △ | ○ | ○ | △ | △ | △ | × | × | ○○ | × | △ | △ | × | × | × |
| | Holding power test (85°C, shift after 24 hours) [mm] | 1.2 | 0.4 | 2.0 | 6 | 1 | 3 | 1 | 0.3 | 0.2 | 0.5 | 0.5 | 0.2 | 0.0 | Fell | 1.0 | Fell | Fell | Fell | 0.5 | 0.5 |
| | | △ | ○○ | △ | △ | ○ | △ | ○ | ○○ | ○○ | ○○ | ○○ | ○○ | ○○ | × | ○ | × | × | × | ○○ | ○○ |

INDUSTRIAL APPLICABILITY

The present invention can provide an adhesive tape having excellent adhesion and exhibiting excellent holding power even under prolonged shear stress at high temperature.

REFERENCE SIGNS LIST

5 polyethylene terephthalate (PET) film
6 specimen
7 SUS 304 plate
8 weight (1 kg)

## Claims

1. An adhesive tape comprising an adhesive layer,

   the adhesive layer containing an acrylic copolymer containing a structural unit derived from an alkyl (meth) acrylate and a structural unit derived from an olefin polymer having a polymerizable unsaturated double bond at an end,
   the adhesive layer having a swelling ratio of 40 or greater and 500 or less when immersed in tetrahydrofuran at a temperature of 25°C for 24 hours.

2. The adhesive tape according to claim 1,
   wherein the adhesive layer has a gel fraction of 20% by weight or greater and 65% by weight or less.

3. The adhesive tape according to claim 1 or 2,
   wherein the acrylic copolymer contains a structural unit derived from a polar group-containing monomer.

4. The adhesive tape according to claim 3,
   wherein the polar group-containing monomer comprises a hydroxy group-containing monomer.

5. The adhesive tape according to claim 4,
   wherein the acrylic copolymer contains 0.01% by weight or more and 2% by weight or less of a structural unit derived from the hydroxy group-containing monomer.

6. The adhesive tape according to claim 1, 2, 3, 4, or 5,
   wherein the adhesive layer contains a crosslinking agent.

7. The adhesive tape according to claim 6,
   wherein the crosslinking agent is an isocyanate crosslinking agent.

8. The adhesive tape according to claim 1, 2, 3, 4, 5, 6, or 7,
   wherein the acrylic copolymer has a weight average molecular weight (Mw) of 500,000 or greater and 1,500,000 or less.

9. The adhesive tape according to claim 1, 2, 3, 4, 5, 6, 7, or 8,
   wherein the alkyl (meth)acrylate is butyl acrylate.

10. The adhesive tape according to claim 1, 2, 3, 4, 5, 6, 7, 8, or 9,
    wherein the acrylic copolymer contains 5% by weight or more and 30% by weight or less of the structural unit derived from an olefin polymer having a polymerizable unsaturated double bond at an end.

11. An adhesive tape comprising an adhesive layer,

    the adhesive layer containing an acrylic copolymer containing a structural unit derived from butyl acrylate and a structural unit derived from an olefin polymer having a polymerizable unsaturated double bond at an end,
    the adhesive layer containing an isocyanate crosslinking agent.

12. The adhesive tape according to claim 1, 2, 3, 4, 5, 6, 7, 8, 9, 10, or 11,

wherein the adhesive layer contains a tackifier resin.

**13.** The adhesive tape according to claim 12, wherein the tackifier resin comprises a high-hydroxy-value tackifier resin having a hydroxy value of 15 mg KOH/g or higher.

**14.** The adhesive tape according to claim 13, wherein the adhesive layer contains 20 parts by weight or more and 40 parts by weight or less of the high-hydroxy-value tackifier resin having a hydroxy value of 15 mg KOH/g or higher relative to 100 parts by weight of the acrylic copolymer.

**15.** The adhesive tape according to claim 12, 13, or 14, wherein the tackifier resin further comprises a low-hydroxy-value tackifier resin having a hydroxy value of lower than 15 mg KOH/g.

**16.** The adhesive tape according to claim 15, wherein the adhesive layer contains 10 parts by weight or more and 60 parts by weight or less of the low-hydroxy-value tackifier resin having a hydroxy value of lower than 15 mg KOH/g relative to 100 parts by weight of the acrylic copolymer.

FIG.1

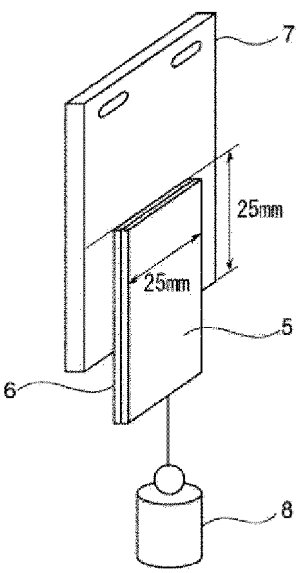

## INTERNATIONAL SEARCH REPORT

International application No. **PCT/JP2023/001309**

**A. CLASSIFICATION OF SUBJECT MATTER**

***C09J 133/06***(2006.01)i; ***C09J 151/06***(2006.01)i; ***C09J 175/04***(2006.01)i; ***C09J 7/38***(2018.01)i
FI: C09J7/38; C09J133/06; C09J175/04; C09J151/06

According to International Patent Classification (IPC) or to both national classification and IPC

**B. FIELDS SEARCHED**

Minimum documentation searched (classification system followed by classification symbols)

C09J133/06; C09J151/06; C09J175/04; C09J7/38

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2003-253225 A (SEKISUI CHEM. CO., LTD.) 10 September 2003 (2003-09-10) claims, examples | 1-12, 15-16 |
| A | claims, examples | 13-14 |
| X | JP 2003-013027 A (SEKISUI CHEM. CO., LTD.) 15 January 2003 (2003-01-15) claims, examples | 1-12, 15-16 |
| A | claims, examples | 13-14 |
| X | JP 2003-013028 A (SEKISUI CHEM. CO., LTD.) 15 January 2003 (2003-01-15) claims, examples | 1-12, 15-16 |
| A | claims, examples | 13-14 |
| X | JP 2001-131250 A (SEKISUI CHEM. CO., LTD.) 15 May 2001 (2001-05-15) examples | 11-12, 15-16 |
| A | examples | 1-10, 13-14 |
| P, X | WO 2022/230935 A1 (SEKISUI CHEM. CO., LTD.) 03 November 2022 (2022-11-03) examples | 1-16 |

☑ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **04 April 2023** | **11 April 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**

International application No.
**PCT/JP2023/001309**

**C. DOCUMENTS CONSIDERED TO BE RELEVANT**

| Category* | Citation of document, with indication, where appropriate, of the relevant passages | Relevant to claim No. |
|---|---|---|
| P, X | WO 2022/230936 A1 (SEKISUI CHEM. CO., LTD.) 03 November 2022 (2022-11-03) examples | 1-16 |

Form PCT/ISA/210 (second sheet) (January 2015)

**INTERNATIONAL SEARCH REPORT**
**Information on patent family members**

International application No.
**PCT/JP2023/001309**

| Patent document cited in search report | Publication date (day/month/year) | Patent family member(s) | Publication date (day/month/year) |
|---|---|---|---|
| JP 2003-253225 A | 10 September 2003 | (Family: none) | |
| JP 2003-013027 A | 15 January 2003 | (Family: none) | |
| JP 2003-013028 A | 15 January 2003 | (Family: none) | |
| JP 2001-131250 A | 15 May 2001 | (Family: none) | |
| WO 2022/230935 A1 | 03 November 2022 | JP 2022-171614 A<br>examples | |
| WO 2022/230936 A1 | 03 November 2022 | JP 2022-171614 A<br>examples | |

Form PCT/ISA/210 (patent family annex) (January 2015)

## REFERENCES CITED IN THE DESCRIPTION

*This list of references cited by the applicant is for the reader’s convenience only. It does not form part of the European patent document. Even though great care has been taken in compiling the references, errors or omissions cannot be excluded and the EPO disclaims all liability in this regard.*

### Patent documents cited in the description


- JP 2009242541 A
- JP 2009258274 A
- JP 2012214544 A